# EUROPEAN PATENT SPECIFICATION

(11) **EP 2 514 732 B1**
(45) Date of publication and mention of the grant of the patent: **08.06.2016**
(21) Application number: 10837084.2
(22) Date of filing: 14.12.2010
(51) Int. Cl.: C04B 35/19, C04B 38/00, B82Y 30/00, C01B 31/00, C04B 35/117, C04B 35/195, C04B 35/443, C04B 35/488, C04B 35/56, C04B 35/565, C04B 35/80, C04B 35/58, C04B 35/581, C04B 35/584, C04B 35/626, C04B 35/645

(54) **COMPOSITE MATERIAL OF ELECTROCONDUCTOR HAVING CONTROLLED COEFFICIENT OF THERMAL EXPANSION, ITS USE AND PROCESS FOR OBTAINING THE MATERIAL**
ELEKTRISCH LEITENDES VERBUNDMATERIAL MIT DEFINIERTEM WÄRMEAUSDEHNUNGSKOEFFIZIENTEN, DESSEN VERWENDUNG SOWIE VERFAHREN ZU DESSEN HERSTELLUNG
MATÉRIAU COMPOSÉ D'UN CONSTITUANT ÉLECTROCONDUCTEUR À COEFFICIENT DE DILATATION THERMIQUE DÉFINI, SON UTILISATION ET PROCÉDÉ POUR SA PRÉPARATION.

(30) Priority: 16.12.2009 ES 200931176
(43) Date of publication of application: 24.10.2012
(73) Proprietor: Consejo Superior De Investigaciones Científicas (CSIC), 28006 Madrid (ES)
(72) Inventor: TORRECILLAS SAN MILLAN, Ramón, E-33011 Oviedo (Asturias) (ES); GARCÍA MORENO, Olga, E-33011 Oviedo (Asturias) (ES); BORRELL TOMÁS, Maria Amparo, E-33011 Oviedo (Asturias) (ES); FERNÁNDEZ VALDES, Adolfo, E-33428 Coruño - Llanera (Asturias) (ES)
(74) Representative: Pons Ariño, Angel
(86) International application number: PCT/ES2010/070827
(87) International publication number: WO 2011/073483

(56) References cited:
- WO-A1-2008/004386
- JP-A- 2005 255 503
- JP-A- 2006 210 390
- US-A1- 2009 269 573
- DONGTAO JIANG ET AL.: 'Effect of sintering Temperature on a single-wall carbon nanotube-toughened alumina-basednanocomposite' SCRIPTA MATERIALIA vol. 56, 2007, pages 959 - 962, XP022024002
- KEN HIROTA ET AL.: 'Fabrication of carbon nanofiber(CNF)- dispersed A1203 composites by pulsed electric-current pressure sintering and their mechanical and electrical properties' JOURNAL OF MATERIALS SCIENCE vol. 42, 19 March 2007, pages 4792 - 4800, XP019503453
- JIN-ZHI LAO ET AL.: 'Spark plasma sintered multiwall-carbon nanotube reinforced aluminum matrix composites' MATERIALS AND DESIGN vol. 31, 28 October 2009, pages S96 - S100, XP027090287
- KEN HIROTA ET AL.: 'Mechanical properties of Simultaneously synthesized and consolidated carbon nanofiber (CNF)-dispersed SiC composites by pulsed electric-current pressure sintering' MATERIALS SCIENCE ENGINEERING A vol. 458, 2007, pages 216 - 225, XP022039843

## Description

The present invention relates to a composite material comprising a ceramic component, characterized in that it has a negative coefficient of thermal expansion, and carbon nanofilaments, to its obtainment process and to its uses as electrical conductor in microelectronics, precision optics, aeronautics and aerospace.

### PRIOR ART

Materials with low coefficient of thermal expansion (CTE) have a broad range of applications in very different fields. These types of materials are required in many types of precision apparatus and in instrumentation equipment in high-technology systems, in the microelectronics industry and precision optics. In short, in all those applications wherein dimensional stability has to be guaranteed of a precision element with changes in temperature, which makes it necessary to decrease the CTE of the materials that form these elements. The imbalance in the thermal expansion in elements manufactured with different materials may also be resolved using the design of composites with a required (and homogeneous) CTE. The design of these materials with tailored CTE can be tackled using the combination of components with positive and negative expansion. This tailored design of the composites' CTE can be carried out for different temperatures, so that the final field of application of the components with zero CTE will depend on whether the other characteristics that the specific functionality for that application requires are achieved. The family of lithium ceramics and glass-ceramics (LAS) and magnesium aluminosilicates (cordierite) are frequently used for this purpose in many fields of application, from glass-ceramics for kitchens to mirrors for satellites. Some mineral phases of this family have a negative CTE which allows their use in composites with controlled and tailored CTE. Frequently, materials with negative CTE have a low resistance to fracture, since their negativity is due to a strong anisotropy between the different crystallographic orientations, wherein negative behaviour is usually found in one of them and positive behaviour in the other two. Anisotropy usually causes microfissures which give the result of low values in the mechanical properties of these materials. Therefore, the addition of oxidic/non-oxidic ceramic phases enables obtaining materials with improved mechanical properties. These materials with controlled CTE are interesting for applications in engineering, photonics, electronics and/or structural (Roy, R. et al., Annual Review of Materials Science, 1989, 19, 59-81).

The phase with negative expansion in the LAS system is ß-eucryptite (LiAlSiO₄), due to the great negative expansion in the direction of one of its crystallographic axes. The spodumene (LiAlSi₂O₆) and petalite (LiAlSi₄O₁₀) phases have CTEs close to zero. The traditional method of manufacturing materials with LAS composition is the processing of glasses to produce glass-ceramics. This method involves the forming of glass to later apply a heat treatment at lower temperatures for the subsequent precipitation of crystalline LAS phases and thus control its CTE. On occasions this process produces heterogeneous materials and, of course, as it is glass, its mechanical properties (rigidity and resistance) are not sufficiently high for many industrial applications compared with other ceramic ones. This is the case of Zerodur^{®} (marketed by Schott) widely used in a multitude of applications but with too low resistance to fracture values. An alternative to glass-ceramics is, therefore, necessary if better mechanical properties are required. There are other ceramic materials with CTE close to zero such as cordierite as disclosed in US4403017 or Invar^{®}. An alternative to the preparation of materials with low CTE consists of the addition of a second phase with positive coefficient of thermal expansion to a ceramic component whose CTE is negative, as in the cases US6953538, JP2007076949 or JP2002220277, and patent application P200803530. This last option is very interesting and the value of the CTE and the other properties can be adjusted by the addition of the suitable proportions of second phases in the matrix. On the other hand, and bearing in mind that the end properties of the material are a consequence of the combination of two or more components, the main problem of these composites lies in managing to control the value of the CTE for a wide temperature range. Thus, in US6953538, JP2007076949 or JP2002220277, the temperature ranges wherein high dimensional stability is achieved are approximately 30-50 °C. In patent application P200803530 the temperature range for a value of CTE close to zero is expanded.

In patent P200803530, magnesium (cordierite) and lithium aluminosilicates are used. Patent with application number P200803530 discloses a method of lithium aluminosilicate synthesis from kaolin, lithium carbonate and precursors of silica and alumina in solution whereby it is possible to obtain LAS ceramics with a controlled CTE and à la carte, choosing different compositions within the Al₂O_{3:}Li₂O:SiO₂ phase diagram

### DESCRIPTION OF THE INVENTION

The present invention provides a composite material comprising a ceramic matrix and carbon nanofilaments, said material being characterized in that it has excellent mechanical, electroconductive and thermal properties. The present invention also provides an obtainment process of the material, and its uses as electrical conductor in the manufacturing of instruments for microelectronics, precision optics, aeronautics and aerospace.

A first aspect of the present invention relates to a material comprising:
a. A ceramic component selected from Li₂O:Al2O3:SiO₂ or MgO:Al₂O₃:SiO₂, and
b. carbon nanofilaments,
where said material has a coefficient of thermal expansion between -6x10⁻⁶°C⁻¹ and 6.01x10⁻⁶°C⁻¹.

This material is a composite material, and these carbon nanofilaments act as electrical conductors; furthermore, they are the reinforcement in the ceramic matrix (with negative coefficient of thermal expansion) of the material disclosed in the present invention. Which makes this material electroconductive.

In the present invention, "composite material" is understood as materials formed by two or more components that can be distinguished from one another, they have properties obtained from the combinations of their components, being superior to the materials formed separately.

The ceramic component, in the present invention, is going to act as matrix of the composite material, therefore being a ceramic matrix.

In the present invention "electroconductive" is understood as the material with the capacity of allowing the passage of electric current or electrons therethrough.

In the present invention "coefficient of thermal expansion" (CTE) is understood as the parameter reflecting the variation in the volume undergone by a material when it is heated.

The material in a preferred embodiment is characterized in that it further contains an oxidic or non-oxidic ceramic compound in a volume percent less than 80%.

The ceramic component is preferably eucryptite or cordierite.

The ceramic component, with negative coefficient of thermal expansion, in a preferred embodiment has a proportion with respect to the end material greater than 10% by volume.

The carbon nanofilaments that act as reinforcement contained in the matrix may be carbon nanofibres or nanotubes, in a preferred embodiment being carbon nanofibres, these carbon nanofibres more preferably having a diameter between 20 and 80 nm, the length/diameter ratio is more preferably greater than 100 and it more preferably has a graphitic structure greater than 70%.

In the present invention, "carbon nanofibres" are understood as carbon filaments with a highly graphitic structure.

The oxidic or non-oxidic ceramic is preferably selected from carbides, nitrides, borides, oxides of metal or any of their combinations. More preferably the oxidic or non-oxidic ceramic is selected from the list comprising: SiC, TiC, AIN, Si₃N₄, TiB₂, Al₂O₃, ZrO₂ and MgAl₂O₄.

The oxidic ceramic is even more preferably Al₂O₃ with a grain size of alumina (Al₂O₃) more preferably between 20 and 1000 nm. And if the ceramic is non-oxidic it is more preferably SiC; even more preferably this silicon carbide selected has a grain size less than 10 µm.

Controlling the reactivity at a high temperature between the phases composing the composite material, and controlling the CTE of the composites so that electroconductive ceramic materials can be created with CTE, depending on the application one wants to give to the material, in a wide range of temperatures. The advantages of using, on the one hand, an electroconductive phase in these composites lies in the possibility of obtaining materials with a high electrical conductivity, maintaining the CTE and low density, on the other hand, the oxidic/non-oxidic ceramics enable obtaining materials with improved mechanical properties.

The electroconductive composite material with ceramic matrix is characterized in that it has a controlled dimensional stability, characterized in that it contains carbon nanofilaments in its composition and the composition of said ceramic matrix has a negative coefficient of thermal expansion, and may have a porosity less than 10 vol% with a value of electrical resistivity less than 1x10⁴ Ωcm, a coefficient of thermal expansion adjusted in accordance with the composition between -6x10⁻⁶ °C⁻¹ and 6.01x10⁻⁶ °C⁻¹ in the temperature range between -150°C and 450°C, a resistance to fracture greater than 60 MPa and a low absolute density.

A second aspect of the present invention relates to an obtainment process as defined in claim 10.

In a preferred embodiment an oxidic or non-oxidic ceramic is added in stage (a) as previously explained.

The solvent used in stage (a) is selected from water, anhydrous alcohol or any of their combinations, and even more preferably the anhydrous alcohol is anhydrous ethanol.

The mixing of stage (a) is performed preferably between 100 and 400 r.p.m. This mixing can be performed in an attrition mill.

The drying of stage (b) in a preferred embodiment is performed by atomization.

In the present invention "atomization" is understood as a method of drying by the pulverization of solutions and suspensions with an airstream.

The forming of stage (c) is performed preferably by cold isostatic pressing or by hot pressing.

In the present invention "isostatic pressing" is understood as a compacting method which is performed by hermetically enclosing the material, generally in the form of powder, in moulds, applying a hydrostatic pressure via a fluid, the parts thus obtained have uniform and isotropic properties.

When the cold isostatic pressing is performed it is more preferably performed at pressures between 100 and 400 MPa.

If a hot pressing is performed, an uniaxial pressure is applied between 5 and 150 MPa, at a temperature between 900 and 1600 °C, with a heating ramp between 2 and 50 °C/min, remaining at this temperature for 0.5 to 10 hours.

The sintering temperature of stage (d) is preferably between 700 and 1600 °C. Stage (d) of sintering can be performed without the application of pressure or applying uniaxial pressure.

When it is performed without applying pressure, the sintering can be performed in a conventional oven, whilst when a uniaxial pressure is applied during the sintering it can be performed by Spark Plasma Sintering (SPS) or Hot-Press.

When the sintering is performed without application of pressure it is performed in an inert atmosphere at a temperature between 1100 and 1600 °C, with a heating ramp between 2 and 10 °C/min, remaining at this temperature for 0.5 and 10 hours. Even more preferably the inert atmosphere is of argon.

With the possibility of even more preferably using subsequent cooling to 900°C using a ramp of between 2 and 10°C/min.

If the sintering using the application of uniaxial pressure is performed by applying a uniaxial pressure between 5 and 150 MPa, at a temperature between 700 and 1600 °C, with a heating ramp of between 2 and 300 °C/min, remaining at this temperature for a period between 1 and 30 min. This method of sintering enables obtaining materials with controlled grain size using short periods of time.

The preparation is carried out by a simple manufacturing process, which is formed and sintered in solid state by different techniques, avoiding the formation of glasses and, in consequence, achieving improved mechanical properties.

If a matrix of lithium or magnesium aluminosilicates has been chosen with an electroconductive phase with the possibility of adding a third oxidic or non-oxidic phase, without there being any reaction between the phases at high temperatures, in this way it improves the mechanical, electrical and thermal properties, simplifying the obtainment process, achieving a dense, whilst ultralight, material. This control is due to the use of the phases with negative CTE in particular.

The alternative presented in the present invention is the obtainment of ceramic materials that are electroconductive with a coefficient of thermal expansion controlled in a wide temperature range, which makes them adaptable to a multitude of mechanical applications, their low density (or light). In addition to being electrical conductors, it open up the possibility that these materials may be machined using electroerosion techniques to be able to prepare achieve obtain the components with the desired form.

A third aspect of the present invention relates to the use of the material as defined in claim 15.

In a preferred embodiment said electrical conductor material being used in the manufacturing of high-precision measuring instruments, mirrors for space observation systems, photolithography scanners, holography, laser instrumentation or heat dissipaters.

In short, these composite materials are used for the manufacturing of components that require high dimensional stability, and more specifically in the structure of mirrors in astronomic telescopes and X-ray telescopes in satellites, optical elements in comet probes, meteorological satellites and microlithography, mirrors and mounts in laser ring gyroscopes, laser distance indicators in resonance, measurement bars and standards in high-precision measurement technologies, etc.

Throughout the description and the claims the word "comprises" and its variants are not intended to exclude other technical characteristics, additives, components or steps. For persons skilled in the art, other objects, advantages and characteristics of the invention will be inferred in part from the description and in part from the practice of the invention. The following figures and examples are provided by way of illustration, and are not intended to limit the present invention.

### DESCRIPTION OF THE FIGURES

**Fig. 1****.** Phase diagram of the Li₂O-Al₂O₃-SiO₂ system, showing the composition used in the examples of embodiment.
**Fig. 2****.** Coefficients of thermal expansion (α curves) corresponding to the LAS materials-carbon nanofibres obtained by sintering in SPS, cordierite-carbon nanofibres obtained by conventional oven, LAS-carbon nanofibres-SiC obtained by hot-press sintering and LAS-carbon nanofibres-Al₂O₃ obtained by sintering in SPS.

### EXAMPLES

Below, the invention will be illustrated with assays performed by the inventors, which reveal the specificity and efficacy of the electroconductive composite material with controlled CTE in the range (-150, +450) °C as a particular embodiment of the process object of the invention.

### Example 1

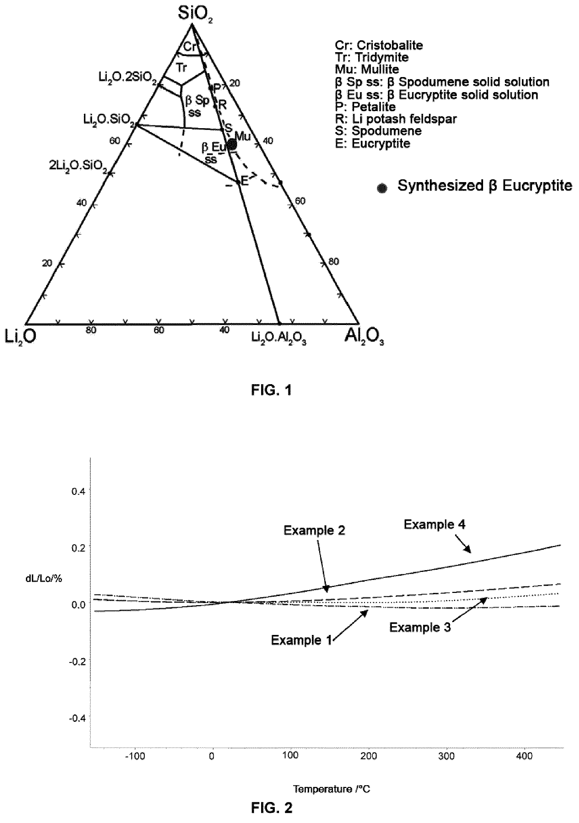

The starting materials are:
a) LAS powder with the composition LiAlSiO₄ (composition A in Figure 1) with average particle size of 1 µm and density 2.39 g/cm³.
b) Carbon nanofibres, with diameters in the order of 20-80 nm and density 1.97 g/cm³.
c) Anhydrous ethanol (99.97% of purity).

700 g of LAS are used which were dispersed in 1400 g of ethanol. It is then mixed with a suspension of 146.4 g of carbon nanofibres in 2000 g of ethanol. The combination is homogenized by mechanical stirring during 60 minutes and is then milled in an attrition mill operating at 300 r.p.m. during a further 60 minutes. The suspension thus prepared is dried by atomization, obtaining nanocomposite granules whist recovering the ethanol from the process. The milling stage enables preparing a homogeneous powder and of nanometric size that improves the densification of the end material.

The dry product thus obtained was subjected to a forming and sintering process using Spark Plasma Sintering (SPS). For this, 14.5 grams of the material are introduced in a graphite mould with a diameter of 40 mm and it is uniaxially pressed at 10 MPa. Next, the sintering is carried out by applying a maximum pressure of 80 MPa, with heating ramp of 100 °C/min to 1200 °C and 1 minute's stay.

The resulting material was characterized by its real density (helium pycnometry), apparent density (Archimedes' method), Young's modulus (resonance frequency method in a Grindosonic unit), resistance to fracture (four point bending method in an INSTRON 8562 unit), and coefficient of thermal expansion (dilatometer, make: NETZCH, model: DIL402C). The corresponding values appear in Table 1. The variation of the coefficient of thermal expansion with the temperature is represented in Figure 2.

**Table 1: Results obtained from the characterization of the composite material of LAS and carbon nanofibres, sintering by SPS.**

| Property | Ex.1 |
|---|---|
| % Theoretical density 100x(dₐₚₚₐᵣₑₙₜ/dᵣₑₐₗ) | 99.8 |
| Resistance to fracture (MPa) | 165 |
| CTE(x10⁻⁶°C⁻¹)(-150, 150)°C | -1.34 |
| CTE(x10⁻⁶ °C⁻¹) (-150, 450) °C | -0.69 |

### Example 2

The starting materials are:
a) Cordierite powder with the composition 2Al₂O₃·5SiO₂·2MgO with density 2.65 g/cm³.
b) Carbon nanofibres, with diameters in the order of 20-80 nm and density 1.97 g/cm³.
c) Anhydrous ethanol (99.97% purity).

900 g of cordierite were used which were dispersed in 1600 g of ethanol. It is then mixed with a suspension of 21 g of carbon nanofibres in 400 g of ethanol. The combination is homogenized by mechanical stirring during 60 minutes and is then milled in an attrition mill operating at 300 r.p.m. during a further 60 minutes. The suspension thus prepared is dried by atomization, obtaining nanocomposite granules whist recovering the ethanol from the process.

The dry product was subjected to a forming process using cold isostatic pressing at 200 MPa. A formed material is obtained which is sintered in a conventional oven in an argon atmosphere at 1400°C, with a stay of 120 minutes and heating ramp of 5°C/min.

The resulting material was characterized by its real density (helium pycnometry), apparent density (Archimedes' method), Young's modulus (resonance frequency method in a Grindosonic unit), resistance to fracture (four point bending method in an INSTRON 8562 unit), and coefficient of thermal expansion (dilatometer, make: NETZCH, model: DIL402C). The corresponding values appear in Table 2. The variation of the coefficient of thermal expansion with the temperature is represented in Figure 2.

**Table 2: Results obtained from the characterization of the composite material of cordierite and carbon nanofibres, sintering in conventional oven.**

| Property | Ex.2 |
|---|---|
| % Theoretical density 100x(dₐₚₚₐᵣₑₙₜ/dᵣₑₐₗ) | 99.1 |
| Resistance to fracture (Mpa) | 120 |
| CTE(x10⁻⁶ °C⁻¹) (-150, 150) °C | -0.02 |
| CTE(x10⁻⁶ °C⁻¹) (-150, 450) °C | 0.91 |

### Example 3

The starting materials are:
a) LAS powder with the composition LiAlSiO₄ (composition in Figure 1) with average particle size of 1 µm and density 2.39 g/cm³.
b) Carbon nanofibres, with diameters in the order of 20-80 nm and density 1.97 g/cm³.
c) SiC powder with average particle size less than 100 nm and density 3.20 g/cm³.
d) Anhydrous ethanol (99.97% purity)

600 g of LAS were used which were dispersed in 1300 g of ethanol. It is then mixed with a suspension of 63 g of carbon nanofibres in 1100 g of ethanol and a suspension of 143.8 g of n-SiC in 1000 g of ethanol. The combination is homogenized by mechanical stirring during 60 minutes and is then milled in an attrition mill operating at 300 r.p.m. during a further 60 minutes. The suspension thus prepared is dried by atomization, obtaining nanocomposite granules whist recovering the ethanol from the process.

The dry product thus obtained was subjected to a forming and sintering process using Hot-Press. For this, 30 grams of the material are introduced in a graphite mould with a diameter of 50 mm and it is uniaxially pressed at 5 MPa. Next, the sintering is carried out by applying a maximum pressure of 35 MPa, with heating ramp of 5 °C/min until 1150 °C and 120 minutes' stay.

The resulting material was characterized by its real density (helium pycnometry), apparent density (Archimedes' method), Young's modulus (resonance frequency method in a Grindosonic unit), resistance to fracture (four point bending method in an INSTRON 8562 unit), and coefficient of thermal expansion (dilatometer, make; NETZCH, model; DIL402C). The corresponding values appear in Table 3. The variation of the coefficient of thermal expansion with the temperature is represented in Figure 2.

**Table 3: Results obtained from the characterization of the composite material of LAS and carbon nanofibres, sintering by Hot-Press.**

| Property | Ex.3 |
|---|---|
| % Theoretical density 100x(dₐₚₚₐᵣₑₙₜ/dᵣₑₐₗ) | 98.8 |
| Resistance to fracture (Mpa) | 144 |
| CTE(x10⁻⁶ °C⁻¹)(-150, 150) °C | -0.34 |
| CTE(x10⁻⁶ °C⁻¹) (-150, 450) °C | 0.35 |

### Example 4

The starting materials are:
a) LAS powder with the composition LiAlSiO₄ (composition in Figure 1) with average particle size of 1 µm and density 2.39 g/cm³.
b) Carbon nanofibres, with diameters in the order of 20-80 nm and density 1.97 g/cm³.
c) Alumina powder with average particle size less than 160 nm and density 3.93 g/cm³.
d) Anhydrous ethanol (99.97% purity)

250 g of LAS were used which were dispersed in 800 g of ethanol. It is then mixed with a suspension of 104.6 g of carbon nanofibres in 1300 g of ethanol and a suspension of 411.2 g of Al₂O₃ in 1000 g of ethanol. The combination is homogenized by mechanical stirring during 60 minutes and is then milled in an attrition mill operating at 300 r.p.m. during a further 60 minutes. The suspension thus prepared is dried by atomization, obtaining nanocomposite granules whist recovering the ethanol from the process.

The dry product thus obtained was subjected to a forming and sintering process using Spark Plasma Sintering (SPS). For this, 18.4 grams of the material were introduced in a graphite mould with a diameter of 40 mm and it is uniaxially pressed at 10 MPa. Next, the sintering is carried out by applying a maximum pressure of 80 MPa, with heating ramp of 100 °C/min to 1250 °C and 1 minutes' stay.

The resulting material was characterized by its real density (helium pycnometry), apparent density (Archimedes' method), Young's modulus (resonance frequency method in a Grindosonic unit), resistance to fracture (four point bending method in an INSTRON 8562 unit), and coefficient of thermal expansion (dilatometer, make: NETZCH, model: DIL402C). The corresponding values appear in Table 4. The variation of the coefficient of thermal expansion with the temperature is represented in Figure 2.

**Table 4: Results obtained from the characterization of the composite material of LAS and carbon nanofibres, sintering using Spark Plasma Sintering (SPS).**

| Property | Ex.4 |
|---|---|
| % Theoretical density 100x(dₐₚₚₐᵣₑₙₜ/dᵣₑₐₗ) | 98.9 |
| Resistance to fracture (MPa) | 310 |
| CTE(x10⁻⁶ K⁻¹) (-150, 150) °C | 2.83 |
| CTE(x10⁻⁶ K⁻¹) (-150, 450) °C | 3.88 |

## Claims

1. Material comprising:
a. A ceramic component is selected from Li₂O:Al₂O₃:SiO₂ or MgO:Al₂O₃:SiO₂, and
b. carbon nanofilaments,
wherein said material is **characterized in that** it has a coefficient of thermal expansion between -6x10⁻⁶ °C⁻¹ and 6.01x10⁻⁶ °C⁻¹.

2. Material according to claim 1, wherein it further contains an oxidic or non-oxidic ceramic in a volume percent less than 80%.

3. Material according to claim 1, wherein the ceramic component is β-eucryptite or cordierite.

4. Material according to any of claims 1 to 3, wherein the ceramic component has a volume percent with respect to the end material, greater than 10%.

5. Material according to any of claims 1 to 4, wherein the carbon nanofilaments are carbon nanofibres, preferably the carbon nanofibres, have a diameter between 20 and 80 nm.

6. Material according to claim 5, wherein the carbon nanofibres have a length/diameter ratio greater than 100.

7. Material according to any of claims 5 to 6, wherein the carbon nanofibres have a graphitic structure greater than 70%.

8. Material according to any of claims 1 to 7, wherein the oxidic or non-oxidic ceramic is selected from carbides, nitrides, borides, oxides of metal or any of their combinations, preferably the oxidic or non-oxidic ceramic is selected from the list comprising: SiC, TiC, AIN, Si₃N₄, TiB₂, Al₂O₃, ZrO₂ and MgAl₂O₄.

9. Material according to claim 8, wherein the oxidic ceramic is Al₂O₃ or SiC, preferably the Al₂O₃ has a grain size between 20 and 1000 nm or the SiC has a grain size less than 10 µm.

10. Process to obtain the material according to claims 1 to 9 comprising the stages:
a. Mixing of the ceramic component with the nanofilaments in a solvent, preferably the solvent is selected from water, anhydrous alcohol or any of their combinations;
b. Drying of the mixture obtained in (a), preferably the drying of stage (b) is performed by atomization;
c. Forming of the material obtained in (b), preferably the forming of stage (c) is performed by cold or hot isostatic pressing; more preferably the cold isostatic pressing is performed at pressures between 100 and 400 MPa.
d. Sintering of the material obtained in (c), preferably the sintering of stage (d) is performed at temperatures between 700 and 1600 °C, more preferably is performed without the application of pressure or applying uniaxial pressure.

11. Process according to claim 10, wherein an oxidic or non-oxidic ceramic is further added in stage (a).

12. Process according to claim 11, wherein the hot pressing is performed by applying a uniaxial stress between 5 and 150 MPa, at a temperature between 900 and 1600°C, with a heating ramp between 2 and 50°C/min, remaining at this temperature for 0.5 a 10 hours.

13. Process according to claim 10, wherein the sintering is performed in inert atmosphere at a temperature between 1100 and 1600 °C, with a heating ramp between 2 and 10 °C/min, remaining at this temperature for 0.5 and 10 hours, preferably the inert atmosphere is of argon, or wherein the sintering is performed by applying a uniaxial pressure between 5 and 150 MPa, at a temperature between 700 and 1600 °C, with a heating ramp of between 2 and 300 °C/min, remaining at this temperature for a period between 1 and 30 min.

14. Process according to claim 13, wherein subsequent cooling to 900 °C is performed using a ramp of between 2 and 10 °C/min.

15. Use of the material according to any of claims 1 to 9, as electrical conductor and/or as material in the manufacturing of ceramic components with high dimensional stability, preferably in the manufacturing of high-precision measuring instruments, mirrors for space observation systems, photolithography scanners, holography, laser instrumentation or heat dissipaters.

## Patentansprüche

1. Material, das Folgendes umfasst:
a) Auswahl eines keramischen Bestandteils aus Li₂O:Al₂O₃:SiO₂ oder MgO:Al₂O₃:SiO₂ und
b) Kohlenstoff-Nanofilamente,
wobei dieses Material **dadurch gekennzeichnet ist, dass** es einen Wärmeausdehnungskoeffizienten zwischen -6x10⁻⁶ °C⁻¹ und 6,01x10⁻⁶ °C⁻¹ besitzt.

2. Material nach Anspruch 1, wobei dieses weiterhin ein oxidisches und nicht oxidisches keramisches Material mit einem Volumenprozent unter 80 % enthält.

3. Material nach Anspruch 1, wobei der keramische Bestandteil ein ß-Eukryptit oder ein Cordierit ist.

4. Material nach jedem der Ansprüche 1 bis 3, wobei der keramische Bestandteil ein Volumenprozent in Bezug auf das Endmaterial über 10 % besitzt.

5. Material nach jedem der Ansprüche 1 bis 4, wobei die Kohlenstoff-Nanofilamente Kohlenstoff-Nanofasern sind und die Kohlenstoff-Nanofasern vorzugsweise einen Durchmesser zwischen 20 und 80 nm besitzen.

6. Material nach Anspruch 5, wobei die Kohlenstoff-Nanofasern ein Längen-Durchmesserverhältnis über 100 besitzen.

7. Material nach jedem der Ansprüche 5 bis 6, wobei die Kohlenstoff-Nanofasern eine graphitische Struktur über 70 % besitzen.

8. Material nach jedem der Ansprüche 1 bis 7, wobei das oxidische oder nicht oxidische keramische Material aus Carbiden, Nitriden, Boriden, Metalloxiden oder jeder ihrer Kombinationen ausgewählt wird, wobei das oxidische oder nicht oxidische keramische Material vorzugsweise aus der Liste der folgenden Materialien ausgewählt wird: SiC, TiC, AIN, Si₃N₄, TiB₂, Al₂O₃, ZrO₂ und NMgAl₂O₄.

9. Material nach Anspruch 8, wobei das oxidische keramische Material Al₂O₃ oder SiC ist und das Al₂O₃ vorzugsweise eine Korngröße zwischen 20 und 1000 nm oder das SiC eine Korngröße kleiner als 10 µm besitzt.

10. Prozess zur Erhaltung des Materials nach den Ansprüchen 1 bis 9, der die folgenden Phasen umfasst:
a) Mischung des keramischen Bestandteils mit den Nanofilamenten in einer Lösung, wobei die Lösung vorzugsweise aus Wasser, wasserfreiem Alkohol oder jeder der Kombinationen derselben ausgewählt wird;
b) Trocknung der in (a) erhaltenen Mischung, wobei die Trocknung der Phase (b) vorzugsweise mittels Atomisierung erfolgt;
c) Formung des in (b) erhaltenen Materials, wobei die Formung der Phase (c) vorzugsweise durch kaltes oder heißes isostatisches Pressen erzielt wird, wobei das kalte isostatische Pressen noch bevorzugter bei einem Druck zwischen 100 und 400 MPa durchgeführt wird;
d) Sintern des in (c) erhaltenen Materials, wobei das Sintern der Phase (d) vorzugsweise bei Temperaturen zwischen 700 und 1600 °C durchgeführt wird, wobei dieses noch bevorzugter ohne die Aufbringung von Druck oder die Aufbringung eines einachsigen Drucks durchgeführt wird.

11. Prozess nach Anspruch 10, wobei in der Phase (a) außerdem ein oxidisches oder nicht oxidisches keramisches Material hinzugefügt wird.

12. Prozess nach Anspruch 11, wobei das heiße Pressen durch die Aufbringung einer einachsigen Belastung zwischen 5 und 150 MPa bei einer Temperatur zwischen 900 und 1600 °C und einer Aufheizrampe zwischen 2 und 50 °C/Min. erfolgt und diese Temperatur während 0,5 bis 10 Stunden aufrechterhalten wird.

13. Prozess nach Anspruch 10, wobei das Sintern in einer inerten Atmosphäre bei einer Temperatur zwischen 1100 und 1600 °C mit einer Aufheizrampe zwischen 2 und 10 °C/Min. erfolgt und diese Temperatur während 0,5 und 10 Stunden aufrechterhalten wird, vorzugsweise besteht die inerte Atmosphäre aus Argon, oder wobei das Sintern durch die Aufbringung eines einachsigen Drucks zwischen 5 und 150 MPa bei einer Temperatur zwischen 700 und 1600 °C und einer Aufheizrampe zwischen 2 und 300 °C/Min. erfolgt und diese Temperatur während eines Zeitraums zwischen 1 und 30 Minuten aufrechterhalten wird.

14. Prozess nach Anspruch 13, wobei eine anschließende Kühlung auf 900 °C unter Verwendung einer Rampe zwischen 2 und 10 °C/Min. durchgeführt wird.

15. Verwendung des Materials nach jedem der Ansprüche 1 bis 9 als elektrisch leitendes Material und/oder als Material bei der Herstellung von keramischen Bestandteilen mit einer hohen Formstabilität, vorzugsweise bei der Herstellung von hochpräzisen Messgeräten, Spiegeln für Weltraum-Beobachtungssysteme, Fotolithografie-Scannern, Holografie, Laserinstrumenten oder Wärmeableitern.

## Revendications

1. Matériau comprenant :
a). un composant céramique choisi entre Li₂O:Al₂O₃:SiO₂ et MgO:Al₂O₃:SiO₂, et
b). des nanofilaments de carbone,
dans lequel ledit matériau est **caractérisé en ce qu'**il possède un coefficient de dilatation thermique compris entre -6x10⁻⁶°C⁻¹ et 6.01x⁻⁶°C⁻¹.

2. Matériau selon la revendication 1, dans lequel est comprise en outre une céramique contenant des oxydes ou n'en contenant pas à un pourcentage en volume inférieur à 80%.

3. Matériau selon la revendication 1, dans lequel le composant céramique est de la β-eucryptite ou de la cordiérite.

4. Matériau selon n'importe laquelle des revendications 1 à 3, dans lequel le composant céramique à un pourcentage en volume par rapport au matériau final, supérieur à 10%.

5. Matériau selon n'importe laquelle des revendications 1 à 4, dans lequel les nanofilaments de carbone sont des nanofibres de carbone, les nanofibres de carbone ont de préférence un diamètre compris entre 20 et 80 nm.

6. Matériau selon la revendication 5, dans lequel les nanofibres de carbone ont un rapport longueur/diamètre supérieur à 100.

7. Matériau selon n'importe laquelle des revendications 5 à 6, dans lequel les nanofibres de carbone ont une structure graphitique supérieure à 70%.

8. Matériau selon n'importe laquelle des revendications 1 à 7, dans lequel la céramique contenant des oxydes ou n'en contenant pas est choisie parmi des carbures, nitrures, borures, oxydes de métal ou n'importe laquelle de leurs combinaisons, la céramique contenant des oxydes ou n'en contenant pas est choisie de préférence dans la liste comprenant : SiC, TiC, AIN, Si₃N₄, TiB₂, Al₂O₃, ZrO₂ et MgAl₂O₄.

9. Matériau selon la revendication 8, dans lequel la céramique contenant des oxydes est Al₂O₃ ou SiC, de préférence l'Al₂O₃ a une grosseur de grain comprise entre 20 et 1000 nm ou le SiC a une grosseur de grain inférieure à 10 µm.

10. Procédé pour obtenir le matériau selon les revendications 1 à 9 comprenant ces étapes :
a). mélange du composant céramique avec les nanofilaments dans un solvant, le solvant est choisi de préférence parmi l'eau, l'alcool absolu ou n'importe laquelle de leurs combinaisons ;
b). séchage du mélange obtenu dans l'étape (a), le séchage de l'étape (b) est réalisé de préférence par atomisation ;
c). formage du matériau obtenu dans l'étape (b), le formage de l'étape (c) est réalisé de préférence par pressage isostatique à froid ou à chaud ; de préférence encore le pressage isostatique à froid est réalisé à des pressions comprises entre 100 et 400 MPa,
d). préfusion du matériau obtenu dans l'étape (c), la préfusion de l'étape (d) est réalisée de préférence à des températures comprises entre 700 et 1600°C, de préférence encore elle est réalisée sans application de pression ou en appliquant une pression uniaxiale.

11. Procédé selon la revendication 10, dans lequel une céramique contenant des oxydes ou n'en contenant pas est en outre ajoutée dans l'étape (a).

12. Procédé selon la revendication 11, dans lequel le pressage à chaud est réalisé en appliquant une contrainte uniaxiale comprise entre 5 et 150 MPa, à une température comprise entre 900 et 1600°C, avec une rampe de chauffage comprise entre 2 et 50°C/mn, restant à cette température pendant 0.5 à 10 heures.

13. Procédé selon la revendication 10, dans lequel la préfusion est réalisée dans une atmosphère inerte à une température comprise entre 1100 et 1600°C, avec une rampe de chauffage comprise entre 2 et 10°C/mn, restant à cette température pendant 0.5 à 10 heures, de préférence l'atmosphère inerte est de l'argon, ou dans lequel la préfusion est réalisée en appliquant une pression uniaxiale comprise entre 5 et 150 MPa, à une température comprise entre 700 et 1600°C, avec une rampe de chauffage comprise entre 2 et 300°C/mn, restant à cette température pendant une période comprise entre 1 et 30 mn.

14. Procédé selon la revendication 13, dans lequel le refroidissement à 900°C qui suit est réalisé en utilisant une rampe comprise entre 2 et 10°C/mn.

15. Utilisation du matériau selon n'importe laquelle des revendications 1 à 9, comme conducteur électrique et/ou comme matériau dans la fabrication de composants céramiques avec une haute stabilité dimensionnelle, de préférence dans la fabrication d'instruments de mesure de haute précision, miroirs pour des systèmes d'observation de l'espace, scanners de photolithographie, holographie, instrumentation laser ou instruments de dissipation de chaleur.
